# EUROPÄISCHE PATENTSCHRIFT

(11) **EP 2 603 962 B1**
(45) Veröffentlichungstag und Bekanntmachung des Hinweises auf die Patenterteilung: **14.02.2024**
(21) Anmeldenummer: 11755299.2
(22) Anmeldetag: 31.08.2011
(51) Int. Cl.: B60L 53/10, B60L 53/20, B60L 53/50, H02J 7/00, B60L 53/00, H02H 11/00

(54) **DC-LADESTATION FÜR EINE BATTERIE EINES ELEKTROFAHRZEUGS UND EIN AUFLADEVERFAHREN**
DC CHARGING STATION FOR A BATTERY OF AN ELECTRIC VEHICLE AND A CHARGING METHOD
STATION DE CHARGE À TENSION CONTINUE POUR UNE BATTERIE D'UN VÉHICULE ÉLECTRIQUE ET UN PROCÉDÉ DE CHARGEMENT

(30) Priorität: 23.09.2010 DE 102010041253
(43) Veröffentlichungstag der Anmeldung: 19.06.2013
(73) Patentinhaber: Siemens Aktiengesellschaft, 80333 München (DE)
(72) Erfinder: BÖHM, Markus, 91096 Möhrendorf (DE); CHEROUVIM, Nicholas Demetris, 90409 Nürnberg (DE); REINSCHKE, Johannes, 90425 Nürnberg (DE); STARKL, Johannes, 94110 Wildenranna (DE)
(74) Vertreter: Siemens Patent Attorneys
(86) Internationale Anmeldenummer: PCT/EP2011/065022
(87) Internationale Veröffentlichungsnummer: WO 2012/038222

(56) Entgegenhaltungen:
- EP-A2- 0 574 753
- WO-A1-00/38304
- DE-A1-102006 039 417
- JP-A- S57 185 523
- JP-A- S59 191 477
- US-A- 6 066 939
- US-A1- 2009 189 572
- US-A1- 2009 218 988
- US-A1- 2010 174 667

## Beschreibung

Die Erfindung betrifft eine Gleichspannungs-Schnellladestation für die Batterie eines Elektrofahrzeugs.

Generell wird zum Aufladen einer Batterie eine Gleichspannung bzw. ein Gleichstrom benötigt. Eine Ladestation für eine Batterie eines Elektrofahrzeugs ist in der Regel an einen 3-phasigen Netzanschluss angebunden, so dass zunächst eine AC-DC-Wandlung ausgeführt werden muss. Dabei bietet es sich an, die Wandlung nicht im Elektrofahrzeug auszuführen, sondern in der Ladestation, um zu vermeiden, dass das Elektrofahrzeug selbst mit einem Wechselspannungs-Gleichspannungs-Umrichter (AC-DC-Umrichter) ausgestattet werden muss.

Eine entsprechende DC-Ladestation für Elektrofahrzeuge weist in der Regel zumindest einen 3-phasigen Netzanschluss, einen Eingangsfilter und einen Trenn-Trafo, einen AC-DC-Umrichter sowie einen Batterieanschluss auf.

Der AC-DC-Umrichter ist, insbesondere wenn die Ladestation sowohl zum Laden als auch zum Entladen einer Batterie genutzt werden soll, ein gesteuerter Umrichter. Als Realisierungsformen eines solchen Umrichters können bspw. 6- oder 12-pulsige Thyristor-Brücken oder sogenannte IGBT-Brücken ("insulatedgate bipolar transistor" bzw. Bipolartransistor mit isolierter Gate-Elektrode), die typischerweise mit einer Taktzeit im kHz-Bereich betrieben werden, zum Einsatz kommen.

Um den sog. "Ripple" auf DC-Strom und DC-Spannung am DC-Ausgang des Umrichters zu reduzieren, wird häufig insbesondere im Fall der Thyristor-Brücken ein Ausgangsfilter in Form eines passiven elektrischen Netzwerks zwischen Umrichter und Batterie geschaltet.

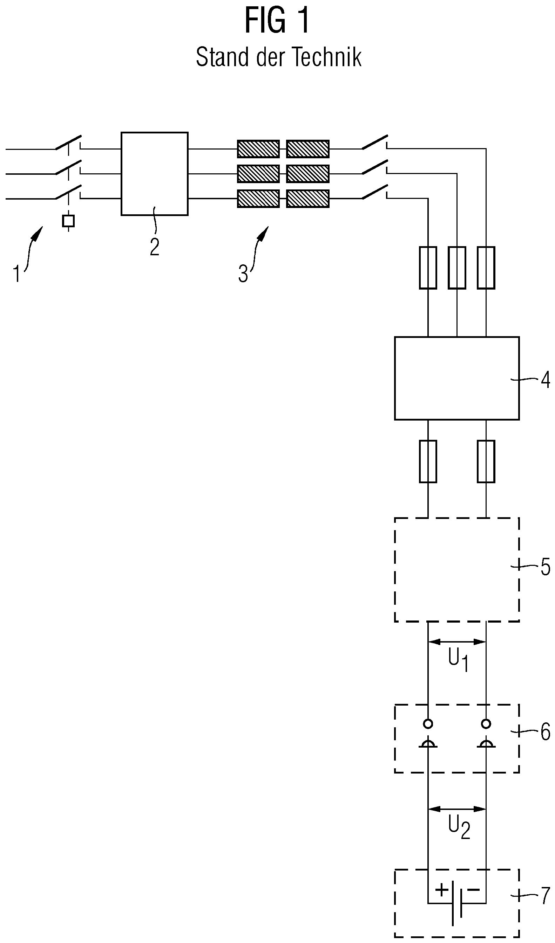

Die Figur 1 zeigt einen bekannten Schaltplan einer DC-Ladestation mit einem 3-phasigen Netzanschluss 1, einem Eingangsfilter 2, einem Trenn-Trafo 3, einem AC-DC-Umrichter 4, einem Ausgangsfilter 5, sowie einem Batterieanschluss 6, über die die aufzuladende Batterie 7 mit der Ladestation verbunden werden kann. Die in Figur 1 ohne Bezeichnungsnummer dargestellten Sicherungen auf der Eingangs- und der Ausgangsseite des Umrichters 4 sind typischerweise zum Schutz des Umrichters 4 vorhanden.

Wäre die Batterie 7 fest mit dem Ausgangsfilter 5 verbunden, d.h. hart verdrahtet und nicht mittels eines Steckers an- und abklemmbar, so wäre die ausgangsseitige Beschaltung des AC-DC-Umrichters 4 unproblematisch. Ein solcher Fall ist bspw. in US 2010/0019737 A1 dargestellt. Da die Batterie 7 aber im Falle eines Elektrofahrzeugs sinnvollerweise über eine elektrische Kopplung 6, beispielsweise eine Steckverbindung, mit den Ausgangsklemmen des Ausgangsfilters 5 der DC-Ladestation elektrisch verbunden wird, ergeben sich Probleme, wenn sich beim Herstellen der Kopplung bzw. Verbindung die Batteriespannung U2 und die Ausgangsspannung U1 der Ladestation, d.h. die Ausgangsspannung des Ausgangsfilters 5, unterscheiden. In diesem Fall kann beim Herstellen der Verbindung zwischen Batterie 7 und Ladestation über die Komponenten des Ausgangsfilters 5 ein Batterie-Lade- oder -Entladestrom fließen, dessen Maximalbetrag ein Mehrfaches des maximal zulässigen Lade- oder Entladestromes betragen kann und der deshalb zu einer Schädigung aller stromdurchflossenen elektrischen Komponenten, bis hin zu einer Zerstörung der Batterie 7, führen kann.

Das beschriebene Problem kann prinzipiell bspw. mit Hilfe der folgenden Maßnahmen vermieden bzw. zumindest vermindert werden:
(i) Verzicht auf den Ausgangsfilter: Diese Variante ist prinzipiell denkbar bei hinreichend schnell getakteten und geregelten IGBT-Umrichtern, jedoch auf Kosten eines größeren Stromripples auf dem Batterie-Lade- bzw. Entladestrom im Vergleich zur Ausbildung mit Ausgangsfilter. Dieser höhere Ripple kann die Batterie-Lebenszeit verringern. Ferner führen schnellere Taktungen der IGBT-Umrichter zu höheren Verlusten in den Umrichtern. Ziel ist es aus Energieeffizienzgesichtspunkten deshalb, die Taktfrequenz so klein und die Einregelzeiten so groß wie möglich zu machen. Der Verzicht auf den Ausgangsfilter ist im Falle von Thyristorbrücken-Umrichtern nicht denkbar. Der resultierende Ripple des Batterie-Lade- bzw. -Entladestroms wäre inakzeptabel groß.
(ii) Erweiterung des LC-Ausgangsfilters um einen Widerstand, der mit der Kapazität C in Reihe geschaltet ist. Dies stellt eine strombegrenzende Maßnahme für den Batterie-Lade- bzw. - Entladestrom dar, der sich aufgrund eines anfänglichen Spannungsunterschiedes zwischen U1 und U2 ergibt. Diese Maßnahme wirkt sich jedoch in einer Verschlechterung der Wirksamkeit des Ausgangsfilters aus. Ferner stellt ein solcher Widerstand während des gesamten Lade- bzw. Entladevorganges eine zusätzliche Verlustquelle dar, einhergehend mit einer Verschlechterung des Wirkungsgrades der Ladestation.
(iii) Einfügen einer Diode zwischen Ausgangsfilter 5 und Batterieklemmen 6. Nach dem Stand der Technik (s. beispielsweise den Chademo-Standard) wird diese Diode in die Plus-Leitung eingefügt und als Rückstromdiode bezeichnet. Eine solche Diode verhindert einen Richtungswechsel des Stromflusses und begrenzt das Integral aus Strom mal Zeit auf die maximale Ladung des Kondensators im Ausgangsfilter 5. Die Nachteile einer Rückstromdiode sind:
   (a) Die Rückstromdiode ist eine zusätzliche Verlustquelle, wobei die Verlustleistung gleich dem Ladestrom mal dem Spannungsabfall von typischerweise 0,9 V bis 1,5 V über der Rückstromdiode ist.
   (b) Eine Ladestation mit Rückstromdiode ist nicht rückspeisefähig, d.h. mit einer solchen Ladestation kann die Batterie nur geladen, nicht aber entladen werden.

Die DE 10 2006 039 417 A1 offenbart eine Batterieladeschaltung und Verfahren zum Laden einer Batterie, bei dem Außenanschlüsse einer Ladeschaltung mit Ausgangsanschlüssen eines Netzteils verbunden werden, wobei die Außenanschlüsse für das Netzteil eine konstante erste Ladespannung an die Außenanschlüsse abgeben. Zu wiederkehrenden Zeiten legt das Netzteil eine konstante zweite Ladespannung an die Außenanschlüsse an, wobei ein Systemzustand der Ladeschaltung abgetastet wird. Beim Detektieren eines vorbestimmten Systemzustands der Ladeschaltung im Anschluss an das Anlegen der zweiten Ladespannung an die Außenanschlüsse wird die Zufuhr von elektrischer Energie zu den Außenanschlüssen unterbrochen. Es wird weiterhin offenbart, dass vor Zuschaltung der Batterie die Spannung der Batterie gemessen wird, und ein Mikrocomputer auf Grund der Höhe der Spannung und der Polarität sowie des gewählten Bereiches des Ladegerätes entscheidet, ob eine Ladung erfolgen kann oder nicht. Eine Zuschaltung der Batterie erfolgt nur bei richtiger Polarität und Spannung. Zusätzlich erfolgt ein Abgleich der Ausgangsspannung des Ladegerätes derart, dass die Spannungsdifferenz zwischen Ladegerät und Batterie im Einschaltmoment minimiert wird, um einen Einschaltstromstoss zu vermeiden bzw. zu reduzieren.

Das US-Patent 6,066,939 offenbart ein zweites Batteriepack mit einem ersten und einem zweiten Anschlussteil, die mit einer Ladevorrichtung verbunden sind, einer zweiten Batterie, einem Mittel zur Ermittlung einer der zweiten Batterie zugeführten Spannung und einem Schaltmittel zwischen dem ersten und dem zweiten Anschlussteil. Das Schaltmittel ist ausgeschaltet, wenn das Mittel zur Ermittlung der Spannung eine erste Spannung ermittelt. Weiterhin weist das zweite Batteriepack einen Ladeschaltkreis zwischen dem ersten und dem zweiten Anschlussteil auf, wobei der Ladeschaltkreis basierend auf der ermittelten Spannung und einer Vergleichsspannung kontrolliert wird.

Es ist daher die Aufgabe der vorliegenden Erfindung, eine mögliche Realisierungsform einer DC-Ladestation und eines Ablaufes eines entsprechenden Ladevorganges anzugeben, die die genannten Nachteile und insbesondere die oben genannte Problematik des unkontrollierten und evtl. zu hohen Batterie-Lade- oder -Entladestroms beim Beginn des Ladevorganges vermeidet.

Diese Aufgabe wird durch die in den unabhängigen Ansprüchen angegebenen Erfindungen gelöst. Vorteilhafte Ausgestaltungen ergeben sich aus den abhängigen Ansprüchen.

Die erfindungsgemäße Lösung basiert auf der Erkenntnis, dass bei Verwendung eines nicht steuerbaren bzw. regelbaren passiven elektrischen Netzwerks am Ausgang des AC-DC-Umrichters der DC-Ladestation ein Spannungsabgleich zwischen Ausgangsspannung U1 der DC-Ladestation und der Batteriespannung U2 erforderlich ist, bevor die Batterie zugeschaltet werden kann.

Eine erfindungsgemäße DC-Ladestation zum Aufladen einer Batterie eines Elektrofahrzeugs, weist auf:
- eine DC-Spannungsquelle mit einem Ausgang, an dem zumindest im Betriebszustand der DC-Ladestation eine DC-Spannung zur Verfügung steht,
- einen DC-Ausgangsanschluss, an den die aufzuladende Batterie anschließbar ist und der zum Aufladen der Batterie über zwei Leitungen der DC-Ladestation mit der DC-Spannungsquelle verbindbar ist,
- eine Spannungsabgleichseinheit, die zwischen den Ausgang der DC-Spannungsquelle und den DC-Ausgangsanschluss der DC-Ladestation geschaltet ist und die einen extern steuerbaren ersten Schalter aufweist, der derart ansteuerbar ist, dass er wahlweise eine Verbindung zwischen dem Ausgang der DC-Spannungsquelle und dem DC-Ausgangsanschluss der DC-Ladestation herstellen oder unterbrechen kann,
- eine erste Spannungserfassungseinheit, welche die eingangsseitige Spannung (U1) der Spannungsabgleichseinheit erfasst,
- eine zweite Spannungserfassungseinheit, welche die ausgangsseitige Spannung (U2) der Spannungsabgleichseinheit erfasst,
- eine Steuer- und Regeleinheit zur Steuerung und Regelung der Spannungsabgleichseinheit, der die mit der ersten und der zweiten Spannungserfassungseinheit erfassten Messwerte (U1, U2) zugeführt sind,
wobei die Steuer- und Regeleinheit eingerichtet ist, den ersten Schalter dahingehend anzusteuern, dass er beide Leitungen der Verbindung unterbricht, bevor und während die Batterie an den DC-Ausgangsanschluss angeschlossen wird, und
- zumindest bei an den DC-Ausgangsanschluss angeschlossener Batterie eine Verbindung herstellt, wenn die eingangsseitige Spannung (U1) der Spannungsabgleichseinheit im Wesentlichen der ausgangsseitigen Spannung (U2) der Spannungsabgleichseinheit entspricht.

Die Spannungsabgleichseinheit weist einen Widerstand, insbesondere einen Shunt, auf, über dem die eingangsseitige Spannung (U1) gemessen wird und der zugeschaltet ist, wenn die Spannungsabgleichseinheit den Spannungsabgleich durchführt.

Der Widerstand ist der ersten Spannungserfassungseinheit insbesondere parallel zugeschaltet, wenn sich der erste Schalter in einem geöffneten Zustand befindet.

Der Widerstand ist dann, wenn die eingangsseitige Spannung (U1) der Spannungsabgleichseinheit im Wesentlichen der ausgangsseitigen Spannung (U2) der Spannungsabgleichseinheit entspricht, ausgeschaltet.

Für den Widerstand ist ein zweiter Schalter vorgesehen, der mit dem Widerstand in Reihe geschaltet und gegenläufig mit dem ersten Schalter für die Leitungen gekoppelt ist.

Die DC-Spannungsquelle ist eine regelbare, insbesondere eine spannungsregelbare, Spannungsquelle, wobei eine Steuer- und Regeleinheit zur Steuerung und Regelung der DC-Spannungsquelle vorgesehen ist, die eingerichtet ist, um die DC-Spannungsquelle zumindest im Betriebszustand und zumindest bei an den DC-Ausgangsanschluss angeschlossener Batterie derart einzuregeln, dass die eingangsseitige Spannung (U1) der Spannungsabgleichseinheit im Wesentlichen der ausgangsseitigen Spannung (U2) entspricht.

Dabei ist die Steuer- und Regeleinheit zur Steuerung und Regelung der DC-Spannungsquelle als kaskadierte Spannungs- und Stromregelung implementiert, bei der der Stromregler einen inneren und der Spannungsregler einen äußeren Regelkreis bilden.

Am Ausgang der Spannungsabgleichseinheit kann eine Isolationsüberwachung vorgesehen sein, mit der eine Beschädigung des Ladekabels und/oder eine Beschädigung der Ladebuchse am Fahrzeug und/oder eine Beschädigung der elektrischen Verbindung zur Batterie im Fahrzeug detektierbar ist.

Die DC-Spannungsquelle ist vorteilhafterweise ein AC-DC-Umrichter, an dessen Eingang zumindest im Betriebszustand der DC-Ladestation eine AC-Spannung anlegbar ist, die in die an seinem Ausgang im Betriebszustand zur Verfügung stehende DC-Spannung gewandelt wird.

Zwischen den DC-Ausgang der DC-Spannungsquelle und die Spannungsabgleichseinheit kann ein Ausgangsfilter, insbesondere ein Tiefpassfilter, geschaltet sein, das bspw. als LC- oder als LC-T-Filter ausgebildet sein kann. Die erste Spannungserfassungseinheit erfasst dann die Spannung (U1) am Ausgang des Ausgangsfilters.

Bei einem erfindungsgemäßen Verfahren zum Aufladen einer Batterie eines Elektrofahrzeugs wird eine DC-Ladestation verwendet mit
- einer DC-Spannungsquelle, welche zumindest im Betriebszustand der DC-Ladestation eine DC-Spannung zur Verfügung stellt,
- einem DC-Ausgangsanschluss, an den die aufzuladende Batterie anschließbar ist und der zum Aufladen der Batterie über zwei Leitungen der DC-Ladestation mit der DC-Spannungsquelle verbindbar ist,
- eine Spannungsabgleichseinheit, die zwischen den Ausgang der DC-Spannungsquelle und den DC-Ausgangsanschluss der DC-Ladestation geschaltet ist und die einen extern steuerbaren ersten Schalter und einen Widerstand (R) aufweist, wobei der erste Schalter derart ansteuerbar ist, dass er wahlweise eine Verbindung zwischen dem Ausgang der DC-Spannungsquelle und dem DC-Ausgangsanschluss der DC-Ladestation herstellen oder unterbrechen kann, wobei er beide Leitungen der Verbindung unterbricht, bevor und während die Batterie an den DC-Ausgangsanschluss der DC-Ladestation angeschlossen wird.

Bei diesem Verfahren werden die eingangsseitige Spannung (U1) und die ausgangsseitige Spannung (U2) der Spannungsabgleichseinheit erfasst, nachdem die aufzuladende Batterie an den DC-Ausgangsanschluss angeschlossen wurde. Die Verbindung zwischen dem Ausgang der DC-Spannungsquelle und dem DC-Ausgangsanschluss der DC-Ladestation wird erst dann hergestellt, wenn die eingangsseitige Spannung (U1) der Spannungsabgleichseinheit im Wesentlichen der ausgangsseitigen Spannung (U2) der Spannungsabgleichseinheit entspricht.

Bei dem Verfahren sind die folgenden Schritte vorgesehen:
1) die Verbindung zwischen dem Ausgang der DC-Spannungsquelle und dem DC-Ausgangsanschluss der DC-Ladestation ist vor dem Anschließen der Batterie an die Ladestation zunächst unterbrochen, bspw. dadurch, dass der erste Schalter vor dem Anschließen der Batterie an die Ladestation zunächst geöffnet ist;
2) nach dem Herstellen einer elektrischen Verbindung zwischen der Ladestation und der Batterie wird die ausgangsseitige Spannung (U2) der Spannungsabgleichseinheit ermittelt;
3) die eingangsseitige Spannung (U1) der Spannungsabgleichseinheit wird ermittelt;
4) die DC-Spannungsquelle, insbesondere die am Ausgang der DC-Spannungsquelle zur Verfügung stehende DC-Spannung, wird dahingehend geregelt, dass die eingangsseitige Spannung (U1) der Spannungsabgleichseinheit und die ausgangsseitige Spannung (U2) der Spannungsabgleichseinheit im Wesentlichen übereinstimmen;
5) die Verbindung zwischen dem Ausgang der DC-Spannungsquelle und dem DC-Ausgangsanschluss der DC-Ladestation wird hergestellt, bspw. dadurch, dass der erste Schalter geschlossen wird;
6) der Lade- oder Entladestrom wird auf einen Sollwert hochgefahren.

Die eingangsseitige Spannung (U1) wird über dem Widerstand (R) gemessen, der zu Messzwecken mit Hilfe eines zweiten Schalters zu- und abschaltbar ist. Der Widerstand wird in einem Schritt 3a) vor dem Ausführen von Schritt 4) insbesondere durch Schließen des zweiten Schalters zugeschaltet. In einem Schritt 5a) nach dem Schritt 5) und vor dem Ausführen des nächsten Schrittes wird kurz gewartet.

In einem Schritt 5b) nach dem Schritt 5a) und vor dem Ausführen des nächsten Schrittes wird der Widerstand insbesondere durch Öffnen des zweiten Schalters abgeschaltet.

Die DC-Spannungsquelle ist eine regelbare, insbesondere eine spannungsregelbare, Spannungsquelle. Die DC-Spannungsquelle wird zumindest im Betriebszustand der DC-Ladestation und zumindest bei an den DC-Ausgangsanschluss angeschlossener Batterie derart eingeregelt, dass die eingangsseitige Spannung (U1) der Spannungsabgleichseinheit im Wesentlichen der ausgangsseitigen Spannung (U2) entspricht.

Vorteilhafterweise wird in einem Schritt 5c) nach dem Schritt 5b) und vor dem Ausführen des nächsten Schrittes 6) kurz gewartet.

Weitere Vorteile, Merkmale und Einzelheiten der Erfindung ergeben sich aus dem im Folgenden beschriebenen Ausführungsbeispiel sowie anhand der Zeichnungen.

Dabei zeigt:
- Figur 1: einen Schaltplan einer DC-Ladestation nach dem Stand der Technik,
- Figur 2: einen Schaltplan einer erfindungsgemäßen DC-Ladestation,
- Figur 3: zwei mögliche Ausführungsformen eines Ausgangsfilters .

Die Figur 1 zeigt wie oben beschrieben den Schaltplan einer bekannten DC-Ladestation mit den erläuterten Nachteilen.

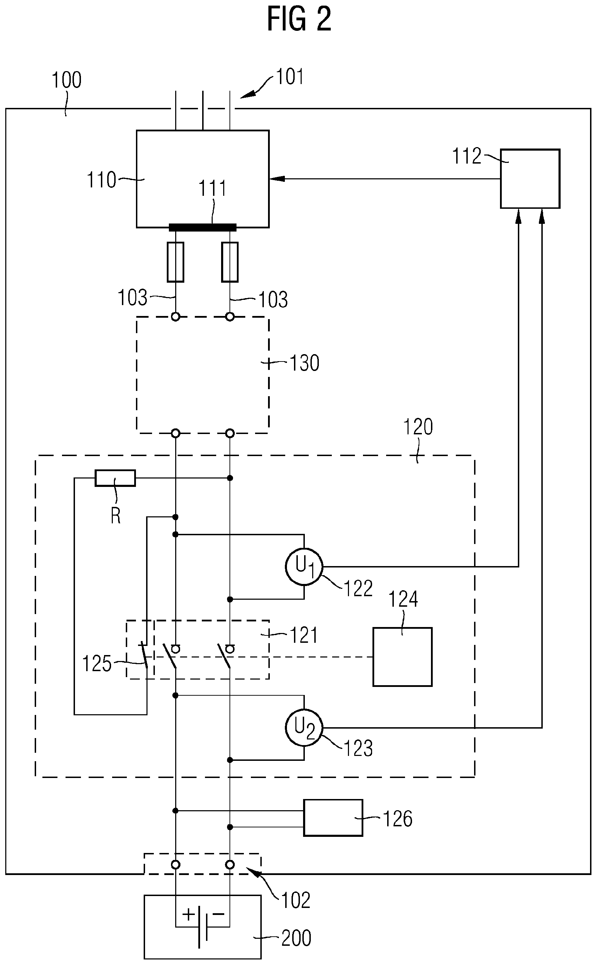

Die Figur 2 zeigt den Schaltplan einer erfindungsgemäßen DC-Ladestation 100 für eine Batterie 200 eines Elektrofahrzeuges. Der Übersichtlichkeit wegen sind weder das Elektrofahrzeug selbst noch die in der Figur 1 gezeigten Komponenten der AC-Spannungsversorgung der Ladestation 100 im einzelnen dargestellt, sondern lediglich ein AC-Eingangsanschluss 101 der DC-Ladestation, der wie in der Figur 1 angedeutet bspw. mit einem 3-phasigen AC-Netzanschluss eines Spannungsversorgungsnetzes verbindbar ist, sowie die Batterie 200 des Elektrofahrzeugs, die mit einem DC-Ausgangsanschluss 102 der DC-Ladestation 100 verbunden ist. Der DC-Ausgangsanschluss 102 ist in der Praxis letztlich ein Ladekabel mit einem Stecker, der in die entsprechende Buchse des Elektrofahrzeugs einsteckbar und so mit der Batterie 200 verbindbar ist.

Die erfindungsgemäße DC-Ladestation 100 weist eine DC-Spannungsquelle 110 auf, die eine DC-Spannung zur Verfügung stellt, mit der letztlich die Batterie 200 aufgeladen wird. Die DC-Spannungsquelle 110 ist als AC-DC-Umrichter 110 ausgebildet, der die am AC-Eingangsanschluss 101 der Ladestation 100 anliegende Wechselspannung U_{AC} in an sich bekannter Weise in eine Gleichspannung U_{DC} wandelt. Die Gleichspannung U_{DC} steht an einem DC-Ausgang 111 des AC-DC-Umrichters 110 zur Verfügung. Der DC-Ausgang 111 ist über entsprechende Leitungen 103 mit dem DC-Ausgangsanschluss 102 der Ladestation 100 verbunden.

Der AC-DC-Umrichter 110 ist ausgangsseitig, d.h. auf der DC-Seite, mit Hilfe einer Steuer- und Regeleinheit 112 sowohl spannungs- als auch stromgeregelt betreibbar. Die Steuer- und Regeleinheit 112 ist bspw. ausgebildet, um die Ausgangsspannung U_{DC} in Abhängigkeit von bestimmten Bedingungen einzustellen. Dies wird unten näher erläutert.

Die erfindungsgemäße DC-Ladestation 100 enthält weiterhin eine DC-DC-Kopplung 120, die nachstehend als Spannungsabgleichseinheit bezeichnet wird und die zwischen den AC-DC-Umrichter 110 und den DC-Ausgangsanschluss bzw. dem Batterieanschluss 102 geschaltet ist. Die Spannungsabgleichseinheit 120 weist einen extern steuerbaren Schalter 121 auf, der beide Leitungen 103 des Gleichstromanschlusses der DC-Ladestation 100 zwischen dem DC-Ausgang 111 des AC-DC-Umrichters 110 und dem DC-Ausgangsanschluss 102 wahlweise unterbrechen bzw. öffnen oder verbinden bzw. schließen kann.

Der extern steuerbare Schalter 121 der Spannungsabgleichseinheit 120 kann bspw. als mechanischer Schalter, Lasttrenner oder Schütz realisiert sein. Auch leistungselektronische Realisierungsformen sind natürlich denkbar.

Ferner verfügt die Spannungsabgleichseinheit 120 über eine erste Spannungserfassungseinheit 122, die die eingangsseitige Spannung U1 der Spannungsabgleichseinheit 120 erfasst, sowie eine zweite Spannungserfassungseinheit 123, die die ausgangsseitige Spannung U2 der Spannungsabgleichseinheit erfasst. Dabei entspricht die ausgangsseitige Spannung U2 der Batteriespannung U_{Batt}, vorausgesetzt, die elektrische Verbindung zum Fahrzeug ist hergestellt und im Fahrzeug ist die Batterie mit Ladebuchse des Fahrzeugs elektrisch verbunden.

Die mit den Spannungserfassungseinheiten 122, 123 erfassten Spannungsmesswerte U1, U2 werden an die Steuer- und Regeleinheit 112 übermittelt, die ein Sollwert-Signal an einen Schalterantrieb 124 der Spannungsabgleichseinheit 120 sendet, wobei der Schalterantrieb 124 den Schalter 121 betätigt.

Die Spannungsabgleichseinheit 120 wird nun mit Hilfe der Steuer- und Regeleinheit 112 so betrieben, dass der Schalter 121 grundsätzlich in einem geöffneten Zustand verbleibt, bevor und während die Batterie 200 angeschlossen wird. Somit ist die Batterie 200 auch während des Anschließens von der DC-Spannungsquelle 110 entkoppelt.

Nachdem die Batterie 200 an den DC-Ausgangsanschluss 102 der DC-Ladestation 100 angeschlossen wurde, wird die Batteriespannung U_{Batt} = U2 mittels der ausgangsseitigen Spannungserfassungseinheit 123 der Spannungsabgleichseinheit 120 gemessen und zunächst auf Plausibilität geprüft. Ist die Batteriespannung nicht in einem Sollbereich zwischen U_{Batt,min} und U_{Batt,max} oder ist die gemessene Batteriespannung gar vorzeichenverkehrt, gibt die Ladestation eine Fehlermeldung aus und die Vorbereitung des Ladevorgangs wird abgebrochen. Nach erfolgreicher Plausibilitätsprüfung der Batteriespannung U_{Batt} = U2 wird U2 mit der eingangsseitigen Spannung U1 verglichen. Gleichzeitig wird der AC-DC-Umrichter 110 mit Hilfe seiner Steuer- und Regeleinheit 112 spannungsgeregelt derart betrieben, dass die Spannung U1 am Eingang der Spannungsabgleichseinheit 120 im Wesentlichen der Spannung U2 am Ausgang der Spannungsabgleichseinheit 120 entspricht. Dabei ist der Ausdruck "im Wesentlichen" so zu verstehen, dass die Spannungen U1, U2 im Rahmen der Messgenauigkeit bzw. in einem Bereich von bspw. etwa 1-10% übereinstimmen. Erst danach wird mit Hilfe des Schalterantriebs 124 in der Spannungsabgleichseinheit 120 der Schalter 121 geschlossen und somit der Lade- bzw. Entlade-Vorgang der Batterie 200 ermöglicht.

Dem AC-DC-Umrichter 110 kann ein Ausgangsfilter 130 nachgeschaltet sein, der sich also zwischen dem DC-Ausgang 111 des AC-DC-Umrichters 110 und der Spannungsabgleichseinheit 120 befindet. Der Filter 130 kann insbesondere als Tiefpassfilter ausgebildet sein, bspw. als LC-Filter oder wie in der Figur 1 dargestellt als LC-T-Filter mit einer Kapazität C und zwei Induktivitäten L1, L2, so dass er wie einleitend erwähnt den "Ripple" auf dem DC-Strom bzw. der DC-Spannung U_{DC} am DC-Ausgang 111 des Umrichters 110 begrenzt. In diesem Fall bestimmt die erste Spannungserfassungseinheit 122, die die Spannung U1 misst, die Spannung am Ausgang des Ausgangsfilters 130 der DC-Ladestation 100.

Zusammenfassend und mit anderen Worten wird also der Schalter 121 erst dann geschlossen und somit der AC-DC-Umrichter 110 mit dem DC-Ausgangsanschluss 102 der DC-Ladestation 100 elektrisch verbunden, wenn zum Einen eine Batterie 200 an den Ausgangsanschluss 102 angeschlossen ist und zum Anderen die Ausgangsspannung U1 der AC-DC-Umrichters 110 bzw. -wenn vorhanden- des Ausgangsfilters 130 der Ausgangsspannung U2 entspricht. Um Bedingung U1=U2 zu erfüllen, wird der AC-DC-Umrichter 110 mit Hilfe seiner Steuer- und Regeleinheit 112 in Abhängigkeit von den gemessenen Spannungen U1 und U2 dahingehend geregelt, dass die Spannung U1 der Spannung U2 entspricht. Erst wenn die Steuer- und Regeleinheit 112 den erfolgten Spannungsabgleich detektiert, erhält der Schalterantrieb 124 das Signal, den Schalter 121 zu schließen.

Die Spannungs- und Stromregelung des AC-DC-Umrichters 110 in der Steuer- und Regeleinrichtung 112 kann als kaskadierte Regelung implementiert sein, bei der der Stromregler den inneren Regelkreis bildet und der Spannungsregler den äußeren Regelkreis. Bei einer solchen Konstellation ist es erforderlich, dass für eine Regelung der DC-Spannung U_{DC} des Umrichters 110 am DC-Ausgang 111 des Umrichters 110 auch ein Strom fließt. Um einen für eine ausreichend genaue Spannungsregelung hinreichend hohen Stromfluss sicherzustellen, enthält die Spannungsabgleichseinheit 120 einen zusätzlichen Widerstand bzw. Shunt R, der parallel zur ersten Spannungserfassungseinheit 122 zugeschaltet ist, wenn der Schalter 121 geöffnet ist. Der Widerstand R hat seine Funktion prinzipiell erfüllt, sobald der Spannungsabgleich U1=U2 erfolgt ist und der Schalter 121 geschlossen wurde, d.h. ab Beginn des eigentlichen Lade- oder Entladevorgangs.

Idealerweise sollte der Widerstand R dann ausgeschaltet werden, um unnötige Verluste über diesen Widerstand R während des Lade- oder Entladevorgangs der Batterie 200 zu vermeiden. Es ist daher ein weiterer Schalter 125 für das Zu- und Abschalten des Widerstands R vorgesehen, der gegenläufig mit dem Schalter 121 gekoppelt ist. D.h. der Schalter 125 ist geöffnet, wenn der Schalter 121 geschlossen ist, und umgekehrt. Beide Schalter können über ein und denselben Schalterantrieb 124 betätigt werden. In einem solchen Fall sind die Schalter 121 und 125 in einem Lasttrenner vereint, wobei der Schalter 121 und Leistungsschalter (Schließer) und der Schalter 125 ein Hilfsschalter (Öffner) ist.

Alternativ sind die Schalter 121 und 125 als separate Schalter mit separaten Schalterantrieben ausgeführt. In diesem Fall werden die Schalter wie folgt betätigt:
- Die Schalter 121 und 125 sind geöffnet und es wird eine elektrische Verbindung zum Fahrzeug bzw. zur Batterie hergestellt.
- U2 wird im plausiblen Spannungsbereich detektiert.
- Schalter 125 wird geschlossen.
- AC-DC-Umrichter wird in den im spannungsgeregelten Betrieb eingeregelt, bis U1=U2 gilt.
- Schalter 121 wird geschlossen; anschließend wird kurz gewartet.
- Schalter 125 wird geöffnet; anschließend wird kurz gewartet.
- Ladestrom oder Entladestrom wird auf den Sollwert hochgefahren.

Zwischen Spannungsabgleichseinheit 120 und DC-Ausgangsanschluss 102 der DC-Ladestation 100 können zusätzlich Mittel 126 zur Isolationsüberwachung vorgesehen sein. Diese Isolationsüberwachung wird beispielsweise benutzt, um eine eventuelle Beschädigung des Ladekabels der DC-Ladestation 100 zu detektieren.

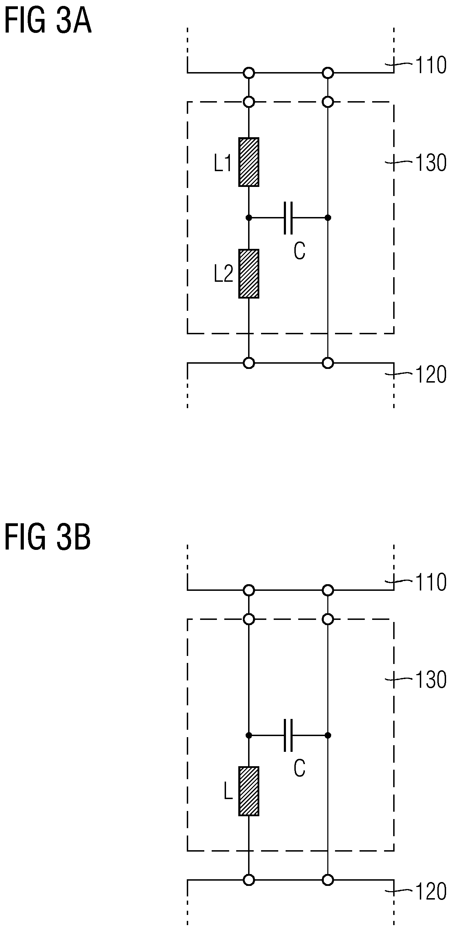

Die Figuren 3A, 3B zeigen zwei mögliche Realisierungsformen des Ausgangsfilters 130. Der Filter 130 wird bevorzugt als LC-T-Filter mit einer Kapazität C und zwei Induktivitäten L1, L2 realisiert (Figur 3A) oder alternativ als LC-Filter mit einer Kapazität C und einer Induktivität L (Figur 3B). Die dargestellten Filter werden derart in die Schaltungen der Ladestation 100 integriert, dass die in den Figuren oben gezeigten Anschlüsse mit dem AC-DC-Umrichter 110 (ggf. über entsprechende Sicherungen) und die unten gezeigten Anschlüsse mit der Spannungsabgleichseinheit 120 verbunden werden.

## Patentansprüche

1. DC-Ladestation (100) zum Aufladen einer Batterie (200) eines Elektrofahrzeugs, aufweisend
- eine DC-Spannungsquelle (110) mit einem Ausgang (111), an dem zumindest im Betriebszustand der DC-Ladestation (100) eine DC-Spannung zur Verfügung steht,
- einen DC-Ausgangsanschluss (102), an den die aufzuladende Batterie (200) anschließbar ist und der zum Aufladen der Batterie (200) über zwei Leitungen (103) der DC-Ladestation (100) mit der DC-Spannungsquelle (110) verbindbar ist,
- eine Spannungsabgleichseinheit (120), die zwischen den Ausgang (111) der DC-Spannungsquelle (110) und den DC-Ausgangsanschluss (102) der DC-Ladestation (100) geschaltet ist und die einen extern steuerbaren ersten Schalter (121) aufweist, der derart ansteuerbar ist, dass er wahlweise eine Verbindung zwischen dem Ausgang (111) der DC-Spannungsquelle (110) und dem DC-Ausgangsanschluss (102) der DC-Ladestation (100) herstellen oder unterbrechen kann,
- eine erste Spannungserfassungseinheit (122), welche die eingangsseitige Spannung (U1) der Spannungsabgleichseinheit (120) erfasst,
- eine zweite Spannungserfassungseinheit (123), welche die ausgangsseitige Spannung (U2) der Spannungsabgleichseinheit (120) erfasst,
- eine Steuer- und Regeleinheit (112) zur Steuerung und Regelung der Spannungsabgleichseinheit (120), der die mit der ersten und der zweiten Spannungserfassungseinheit (122, 123) erfassten Messwerte (U1, U2) zugeführt sind,
wobei die Steuer- und Regeleinheit (112) eingerichtet ist, den ersten Schalter (121) dahingehend anzusteuern, dass er
- beide Leitungen der Verbindung (103) unterbricht, bevor und während die Batterie (200) an den DC-Ausgangsanschluss (102) angeschlossen wird, und
- zumindest bei an den DC-Ausgangsanschluss (102) angeschlossener Batterie (200) eine Verbindung herstellt, wenn die eingangsseitige Spannung (U1) der Spannungsabgleichseinheit (120) im Wesentlichen der ausgangsseitigen Spannung (U2) der Spannungsabgleichseinheit (120) entspricht,
wobei die Spannungsabgleichseinheit (120) einen Widerstand (R), insbesondere einen Shunt, aufweist, über dem die eingangsseitige Spannung (U1) gemessen wird und der zugeschaltet ist, wenn die Spannungsabgleichseinheit (120) den Spannungsabgleich durchführt,
wobei der Widerstand (R) dann, wenn die eingangsseitige Spannung (U1) der Spannungsabgleichseinheit (120) im Wesentlichen der ausgangsseitigen Spannung (U2) der Spannungsabgleichseinheit (120) entspricht, ausgeschaltet ist, und wobei ein zweiter Schalter (125) für den Widerstand (R) vorgesehen ist, der mit dem Widerstand (R) in Reihe geschaltet ist und der gegenläufig mit dem ersten Schalter (121) für die Leitungen (103) gekoppelt ist.

2. DC-Ladestation nach Anspruch 1, wobei die DC-Spannungsquelle (110) eine regelbare, insbesondere eine spannungsregelbare, Spannungsquelle ist, wobei eine Steuer- und Regeleinheit (112) zur Steuerung und Regelung der DC-Spannungsquelle (110) vorgesehen ist, die eingerichtet ist, um die DC-Spannungsquelle (110) zumindest im Betriebszustand und zumindest bei an den DC-Ausgangsanschluss (102) angeschlossener Batterie (200) derart einzuregeln, dass die eingangsseitige Spannung (U1) der Spannungsabgleichseinheit (120) im Wesentlichen der ausgangsseitigen Spannung (U2) entspricht.

3. DC-Ladestation nach Anspruch 2, wobei die Steuer- und Regeleinheit (112) zur Steuerung und Regelung der DC-Spannungsquelle (110) als kaskadierte Spannungs- und Stromregelung implementiert ist, bei der der Stromregler einen inneren und der Spannungsregler einen äußeren Regelkreis bilden.

4. DC-Ladestation nach einem der vorhergehenden Ansprüche, wobei am Ausgang der Spannungsabgleichseinheit (120) eine Isolationsüberwachung (126) vorgesehen ist, mit der eine Beschädigung des Ladekabels und/oder eine Beschädigung der Ladebuchse am Fahrzeug und/oder eine Beschädigung der elektrischen Verbindung zur Batterie im Fahrzeug detektierbar ist.

5. DC-Ladestation nach einem der vorhergehenden Ansprüche, wobei die DC-Spannungsquelle (110) ein AC-DC-Umrichter ist, an dessen Eingang (101) zumindest im Betriebszustand der DC-Ladestation (100) eine AC-Spannung anlegbar ist, die in die an seinem Ausgang (111) im Betriebszustand zur Verfügung stehende DC-Spannung gewandelt wird.

6. Verfahren zum Aufladen einer Batterie (200) eines Elektrofahrzeugs mit einer DC-Ladestation (100) mit
- einer DC-Spannungsquelle (110), welche zumindest im Betriebszustand der DC-Ladestation eine DC-Spannung zur Verfügung stellt,
- einem DC-Ausgangsanschluss (102), an den die aufzuladende Batterie (200) anschließbar ist und der zum Aufladen der Batterie über zwei Leitungen (103) der DC-Ladestation (100) mit der DC-Spannungsquelle (110) verbindbar ist,
- eine Spannungsabgleichseinheit (120), die zwischen den Ausgang (111) der DC-Spannungsquelle (110) und den DC-Ausgangsanschluss (102) der DC-Ladestation (100) geschaltet ist und die einen extern steuerbaren ersten Schalter (121) und einen Widerstand (R) aufweist, wobei der erste Schalter derart ansteuerbar ist, dass er wahlweise eine Verbindung zwischen dem Ausgang (111) der DC-Spannungsquelle (110) und dem DC-Ausgangsanschluss (102) der DC-Ladestation (100) herstellen oder unterbrechen kann, und
wobei er beide Leitungen der Verbindung unterbricht, bevor und während die Batterie (200) an den DC-Ausgangsanschluss (102) der DC-Ladestation (100) angeschlossen wird, wobei
- die eingangsseitige Spannung (U1) und die ausgangsseitige Spannung (U2) der Spannungsabgleichseinheit (120) erfasst werden, nachdem die aufzuladende Batterie (200) an den DC-Ausgangsanschluss (102) angeschlossen wurde, und
- die Verbindung zwischen dem Ausgang (111) der DC-Spannungsquelle (110) und dem DC-Ausgangsanschluss (102) der DC-Ladestation (100) erst dann hergestellt wird, wenn die eingangsseitige Spannung (U1) der Spannungsabgleichseinheit (120) im Wesentlichen der ausgangsseitigen Spannung (U2) der Spannungsabgleichseinheit (120) entspricht,
wobei
1) die Verbindung zwischen dem Ausgang (111) der DC-Spannungsquelle (110) und dem DC-Ausgangsanschluss (102) der DC-Ladestation (110) ist vor dem Anschließen der Batterie (200) an die Ladestation (100) zunächst unterbrochen;
2) nach dem Herstellen einer elektrischen Verbindung zwischen der Ladestation (100) und der Batterie (200) wird die ausgangsseitige Spannung (U2) der Spannungsabgleichseinheit (120) ermittelt;
3) die eingangsseitige Spannung (U1) der Spannungsabgleichseinheit (120) wird ermittelt;
4) die DC-Spannungsquelle (110), insbesondere die am Ausgang (111) der DC-Spannungsquelle (110) zur Verfügung stehende DC-Spannung, wird dahingehend geregelt, dass die eingangsseitige Spannung (U1) der Spannungsabgleichseinheit (120) und die ausgangsseitige Spannung (U2) der Spannungsabgleichseinheit (120) im Wesentlichen übereinstimmen;
5) die Verbindung zwischen dem Ausgang (111) der DC-Spannungsquelle (110) und dem DC-Ausgangsanschluss (102) der DC-Ladestation (100) wird hergestellt;
6) der Lade- oder Entladestrom wird auf einen Sollwert hochgefahren,
wobei die eingangsseitige Spannung (U1) über dem Widerstand (R) gemessen wird, der zu Messzwecken mit Hilfe eines zweiten Schalters (125) zu- und abschaltbar ist, wobei der Widerstand in einem Schritt 3a) vor dem Ausführen von Schritt 4) insbesondere durch Schließen des zweiten Schalters (125) zugeschaltet wird, wobei in einem Schritt 5a) nach dem Schritt 5) und vor dem Ausführen des nächsten Schrittes kurz gewartet wird und wobei in einem Schritt 5b) nach dem Schritt 5a) und vor dem Ausführen des nächsten Schrittes der Widerstand (R) insbesondere durch Öffnen des zweiten Schalters (125) abgeschaltet wird.

7. Verfahren nach Anspruch 6, wobei die DC-Spannungsquelle (110) eine regelbare, insbesondere eine spannungsregelbare, Spannungsquelle ist, wobei die DC-Spannungsquelle (110) zumindest im Betriebszustand der DC-Ladestation (100) und zumindest bei an den DC-Ausgangsanschluss (102) angeschlossener Batterie (200) derart eingeregelt wird, dass die eingangsseitige Spannung (U1) der Spannungsabgleichseinheit (120) im Wesentlichen der ausgangsseitigen Spannung (U2) entspricht.

## Claims

1. DC charging station (100) for charging a battery (200) of an electric vehicle, having
- a DC voltage source (110) with an output (111), at which a DC voltage is available at least in the operating state of the DC charging station (100),
- a DC output terminal (102), to which the battery to be charged (200) is able to be connected and which is able to be linked to the DC voltage source (110), for charging the battery (200) via two lines (103) of the DC charging station (100),
- a voltage balancing unit (120), which is connected between the output (111) of the DC voltage source (110) and the DC output terminal (102) of the DC charging station (100) and which has a controllable first switch (121) which is able to be controlled so that it can optionally make or break a connection between the output (111) of the DC voltage source (110) and the DC output terminal (102) of the DC charging station (100),
- a first voltage detection unit (122), which detects the input-side voltage (U1) of the voltage balancing unit (120),
- a second voltage detection unit (123), which detects the output-side voltage (U2) of the voltage balancing unit (120),
- an open-loop and closed-loop control unit (112) for controlling and regulating the voltage balancing unit (120), to which the measured values (U1, U2) detected by the first and the second voltage detection unit (122, 123) are supplied,
wherein the open-loop and closed-loop control unit (112) is configured to control the first switch (121) to the extent that it
- breaks both lines of the connection (103) before and while the battery (200) is connected to the DC output terminal (102), and
- makes a connection, at least for a battery (200) connected to the DC output terminal (102), if the input-side voltage (U1) of the voltage balancing unit (120) corresponds substantially to the output-side voltage (U2) of the voltage balancing unit (120),
wherein the voltage balancing unit (120) has a resistor (R), especially a shunt, via which the input-side voltage (U1) is measured and which is switched on when the voltage balancing unit (120) carries out the voltage balancing,
wherein, when the input-side voltage (U1) of the voltage balancing unit (120) corresponds substantially to the output-side voltage (U2) of voltage balancing unit (120), the resistor (R) is switched off, and
wherein a second switch (125) is provided for the resistor (R), which is connected in series with the resistor (R) and which is coupled in opposition to the first switch (121) for the line (103).

2. DC charging station according to claim 1, wherein the DC voltage source (110) is a regulatable, especially a voltage-regulatable voltage source, wherein an open-loop and closed-loop control unit (112) is provided for control and regulation of the DC voltage source (110) which is configured to regulate the DC voltage source (110) at least in the operating state and at least for a battery (200) connected to the DC output terminal (102) such that the input-side voltage (U1) of the voltage balancing unit (120) corresponds substantially to the output-side voltage (U2).

3. DC charging station according to claim 2, wherein the open-loop and closed-loop control unit (112) is implemented for control and regulation of the DC voltage source (110) as a cascaded voltage and current regulation unit, in which the current regulator forms an inner regulation circuit and the voltage regulator an outer regulation circuit.

4. DC charging station according to one of the preceding claims, wherein insulation monitoring (126) is provided at the output of the voltage balancing unit (120), with which damage to the charging cable and/or damage to the charging socket on the vehicle and/or damage to the electrical connection to the battery in the vehicle is able to be detected.

5. DC charging station according to one of the preceding claims, wherein the DC voltage source (110) is an AC-DC converter, to the input (101) of which an AC voltage is able to be applied, at least in the operating state of the DC charging station (100), which is converted into the DC voltage available at its output (111) in the operating state.

6. Method for charging a battery (200) of an electric vehicle with a DC charging station (100) with
- a DC voltage source (110), which makes a DC voltage available, at least in the operating state of the DC charging station,
- a DC output terminal (102), to which the battery (200) to be charged is able to be connected and which, for charging the battery, is able to be linked via two lines (103) of the DC charging station (100) to the DC voltage source (110),
- a voltage balancing unit (120), which is connected between the output (111) of the DC voltage source (110) and the DC output terminal (102) of the DC charging station (100)and which has a controllable first switch (121) and a resistor (R), wherein the first switch is able to be controlled such that it can optionally make or break a connection between the output (111) of the DC voltage source (110) and the DC output terminal (102) of the DC charging station (100), and wherein it breaks the two lines of the connection before and while the battery (200) is connected to the DC output terminal (102) of the DC charging station (100),
wherein
- the input-side voltage (U1) and the output-side voltage (U2) of the voltage balancing unit (120) are detected after the battery (200) to be charged has been connected to the DC output terminal (102), and
- the connection between the output (111) of the DC voltage source (110) and the DC output terminal (102) of the DC charging station (100) is only made when the input-side voltage (U1) of the voltage balancing unit (120) corresponds substantially to the output-side voltage (U2) of the voltage balancing unit (120),
wherein
1) the connection between the output (111) of the DC voltage source (110) and the DC output terminal (102) of the DC charging station (110) is initially broken before the connection of the battery (200) to the charging station (100) ;
2) the output-side voltage (U2) of the voltage balancing unit (120) is determined after an electrical connection has been made between the charging station (100) and the battery (200) ;
3) the input-side voltage (U1) of the voltage balancing unit (120) is determined;
4) the DC voltage source (110), especially the DC voltage available at the output (111) of the DC voltage source (110), is regulated to the extent that the input-side voltage (U1) of the voltage balancing unit (120) and the output-side voltage (U2) of voltage balancing unit (120) substantially correspond;
5) the connection between the output (111) of the DC voltage source (110) and the DC output terminal (102) of the DC charging station (100) is made;
6) the charging or discharging current is ramped up to a nominal value,
wherein the input-side voltage (U1) is measured via the resistor (R), which for measurement purposes is able to be connected and disconnected with the aid of a second switch (125), wherein the resistor is connected in a step 3a) before the execution of step 4), especially by closing the second switch (125), wherein there is a short waiting period in a step 5a) after step 5) and before the execution of the next step and
wherein the resistor (R) is disconnected in a step 5b) after step 5a) and before the execution of the next step, especially by opening the second switch (125).

7. Method according to claim 6, wherein the DC voltage source (110) is a regulatable, especially a voltage-regulatable voltage source, wherein the DC voltage source (110), at least in an operating state of the DC charging station (100) and at least for a battery (200) connected to the DC output terminal (102), is regulated to such an extent that the input-side voltage (U1) of the voltage balancing unit (120) corresponds substantially to the output-side voltage (U2).

## Revendications

1. Station (100) de charge en courant continu pour la charge d'une batterie (200) d'un véhicule électrique, comportant
- une source (110) de tension en courant continu ayant une sortie (111), à laquelle est disponible une tension en courant continu au moins dans l'état de fonctionnement de la station (100) de charge en courant continu,
- une borne (102) de sortie en courant continu, à laquelle la batterie (200) à charger peut être connectée et qui, pour la charge de la batterie (200) peut, par deux lignes (103) de la station (100) de charge en courant continu, être connectée à la source (110) de tension en courant continu,
- une unité (120) d'égalisation de la tension, qui est montée entre la sortie (111) de la source (110) de tension en courant continu et la borne (102) de sortie en courant continu de la station (100) de charge en courant continu et qui a un premier interrupteur (121), qui peut être commandé de l'extérieur et qui peut être commandé de manière au choix à établir ou à interrompre une liaison entre la sortie (111) de la source (110) de tension en courant continu et la borne (102) de sortie en courant continu de la station (100) de charge en courant continu,
- une première unité (122) de détection de la tension, qui détecte la tension (U1) du côté de l'entrée de l'unité (120) d'égalisation de la tension,
- une deuxième unité (123) de détection de la tension, qui détecte la tension (U2) du côté de la sortie de l'unité (120) d'égalisation de la tension,
- une unité (112) de commande et de régulation pour la commande et la régulation de l'unité (120) d'égalisation de la tension, à laquelle sont envoyées les valeurs (U1, U2) de mesure détectées par la première et la deuxième unité (122, 123) de détection de la tension,
dans laquelle l'unité (112) de commande et de régulation est agencée pour commander le premier interrupteur (121) de manière à ce qu'il
- interrompe les deux lignes de la liaison (103) avant et pendant que la batterie (200) est connectée à la borne (102) de sortie en courant continu et
- établisse une liaison, au moins lorsque la batterie (200) est connectée à la borne (102) de sortie en courant continu, si la tension (U1) du côté de l'entrée de l'unité (120) d'égalisation de la tension correspond sensiblement à la tension (U2) du côté de la sortie de l'unité (120) d'égalisation de la tension,
dans laquelle l'unité (120) d'égalisation de la tension a une résistance (R), notamment un shunt, par laquelle on mesure la tension (U1) du côté de l'entrée et qui est mise en circuit lorsque l'unité (120) d'égalisation de la tension effectue l'égalisation de la tension,
dans laquelle la résistance (R) est mise hors circuit, lorsque la tension (U1) du côté de l'entrée de l'unité (120) d'égalisation de la tension correspond sensiblement à la tension (U2) du côté de la sortie de l'unité (120) d'égalisation de la tension, et
dans laquelle il est prévu un deuxième interrupteur (125) pour la résistance (R), qui est monté en série avec la résistance (R) et qui est connecté en sens inverse du premier interrupteur (121) pour les lignes (103).

2. Station de charge en courant continu suivant la revendication 1, dans laquelle
la source (110) de tension en courant continu est une source de tension réglable, en particulier réglable en tension, dans laquelle il est prévu une unité (112) de commande et de régulation pour la commande et la régulation de la source (110) de tension en courant continu, qui est agencée pour réguler la source (110) de tension en courant continu au moins dans l'état de fonctionnement et au moins lorsque la batterie (200) est connectée à la borne (102) de sortie en courant continu, de manière à ce que la tension (U1) du côté de l'entrée de l'unité (120) d'égalisation de la tension corresponde sensiblement à la tension (U2) du côté de la sortie.

3. Station de charge suivant la revendication 2, dans laquelle l'unité (112) de commande et de régulation est mise en œuvre pour la commande et la régulation de la source (110) de tension en courant continu sous la forme d'une régulation de tension et de courant en cascade, dans laquelle la régulation du courant forme un circuit de régulation intérieur et la régulation de la tension forme un circuit de régulation extérieur.

4. Station de charge suivant l'une des revendications précédentes, dans laquelle il est prévu à la sortie de l'unité (120) d'égalisation de la tension, un contrôle (126) de l'isolation, par lequel peut être détecté un endommagement du câble de charge et/ou un endommagement de la douille de charge du véhicule et/ou un endommagement de la liaison électrique à la batterie du véhicule.

5. Station de charge suivant l'une des revendications précédentes, dans laquelle la source (110) de tension en courant continu est un convertisseur courant alternatif-courant continu, à l'entrée (101) duquel peut être appliquée, au moins dans l'état de fonctionnement de la station (100) de charge en courant continu, une tension en courant alternatif, qui est transformée en la tension en courant continu disponible dans l'état de fonctionnement à sa sortie (111).

6. Procédé de charge d'une batterie (200) d'un véhicule électrique par une station (100) de charge en courant continu comportant
- une source (110) de tension en courant continu, qui met à disposition une tension en courant continu au moins dans l'état de fonctionnement de la station de charge en courant continu,
- une borne (102) de sortie en courant continu, à laquelle la batterie (200) à charger peut être connectée et qui, pour la charge de la batterie (200) peut, par deux lignes (103) de la station (100) de charge en courant continu, être connectée à la source (110) de tension en courant continu,
- une unité (120) d'égalisation de la tension, qui est montée entre la sortie (111) de la source (110) de tension en courant continu et la borne (102) de sortie en courant continu de la station (100) de charge en courant continu et qui a un premier interrupteur (121) pouvant être commandé de l'extérieur et une résistance (R), dans lequel le premier interrupteur peut être commandé de manière, au choix, à pouvoir établir ou interrompre une liaison entre la sortie (111) de la source (110) de tension en courant continu et la borne (102) de sortie en courant continu de la station (100) de charge en courant continu et dans lequel il interrompt les deux lignes de la liaison avant et pendant que la batterie (200) est connectée à la borne (102) de sortie en courant continu de la station (100) de charge en courant continu,
dans lequel
- on détecte la tension (U1) du côté de l'entrée et la tension (U2) du côté de la sortie de l'unité (120) d'égalisation de la tension, après que la batterie (200) à charger a été connectée à la borne (102) de sortie en courant continu et
- on n'établit la liaison entre la sortie (111) de la source (110) de tension en courant continu et la borne (102) de sortie en courant continu de la station (100) de charge en courant continu que lorsque la tension (U1) du côté de l'entrée de l'unité (120) d'égalisation de la tension correspond sensiblement à la tension (U2) du côté de la sortie de l'unité (120) d'égalisation de la tension,
dans lequel
1) la liaison entre la sortie (111) de la source (110) de tension en courant continu et la borne (102) de sortie en courant continu de la station (100) de charge en courant continu est interrompue d'abord avant la connexion de la batterie (200) à la station (100) de charge ;
2) après l'établissement d'une liaison électrique entre la station (100) de charge et la batterie (200), on détermine la tension (U2) du côté de la sortie de l'unité (120) d'égalisation de la tension ;
3) on détermine la tension (U1) du côté de l'entrée de l'unité (120) d'égalisation de la tension ;
4) on régule la source (110) de tension au courant continu, en particulier la tension en courant continu disponible à la sortie (111) de la source (110) de tension en courant continu en faisant sensiblement coïncider la tension (U1) du côté de l'entrée de l'unité (120) d'égalisation de la tension et la tension (U2) du côté de la sortie de l'unité (120) d'égalisation de la tension ;
5) on établit la liaison entre la sortie (111) de la source (110) de tension en courant continu et la borne (102) de sortie en courant continu de la station (100) de charge en courant continu ;
6) on amène le courant de charge ou de décharge à une valeur de consigne,
dans lequel on mesure la tension (U1) du côté de l'entrée aux bornes de la résistance (R) qui, à des fins de mesure, peut être mise en circuit et hors circuit à l'aide d'un deuxième interrupteur (125), dans lequel on met en circuit la résistance dans un stade 3a) avant l'exécution du stade 4), en particulier en fermant le deuxième interrupteur (125), dans lequel dans un stade 5a) après le stade 5) et avant l'exécution du stade suivant, on la court-circuite, dans lequel dans le stade 5b) après le stade 5a) et avant l'exécution du stade suivant, on met la résistance (R) hors circuit, en particulier en ouvrant le deuxième interrupteur (125).

7. Procédé suivant la revendication 6, dans lequel
la source (110) de tension en courant continu est une source de tension réglable, notamment réglable en tension, dans lequel on règle la source (110) de tension en courant continu au moins dans l'état de fonctionnement de la tension (100) de charge en courant continu et au moins lorsqu'une batterie (200) est connectée à la borne (102) de sortie en courant continu, de manière à ce que la tension (U1) du côté de l'entrée de l'unité (120) d'égalisation de la tension corresponde sensiblement à la tension (U2) du côté de la sortie.
